# EUROPEAN PATENT APPLICATION

(11) **EP 4 607 364 A1**
(43) Date of publication of application: **27.08.2025**
(21) Application number: 24203292.8
(22) Date of filing: 27.09.2024
(51) Int. Cl.: G06F 15/78

(54) **COMPUTE DEVICE**

(30) Priority: 22.02.2024 EP 24159186; 20.03.2024 EP 24164856
(71) Applicant: Signaloid Limited, Cambridge Cambridgeshire CB1 2GE (GB)
(72) Inventor: Stanley-Marbell, Phillip, Cambridge (GB); Vailakis, Apostolos Nikolaos, Cambridge (GB)
(74) Representative: Legl, Stefan

(57) **Abstract**

The present disclosure relates to a compute device, comprising a micro Secure Digital, microSD, card; and one or more Field Programmable Gate Arrays, FPGAs, installed on the microSD card.

## Description

### FIELD

The present disclosure relates to a compute device and a data processing system. More particularly, the present disclosure relates to a compute device for offloading computation through a data storage interface.

### BACKGROUND

Nowadays, computers play a pivotal role in data processing across virtually all facets of life. The scope of data handled by computers encompasses a wide range, including, but not limited to, sensor readings, stock market data, and outputs from quantum computers. The necessity for compatible and flexible computing systems in data processing cannot be overstated, as it profoundly influences various critical aspects such as: interoperability, which ensures seamless integration between different systems; flexibility, which allows for adaptation to evolving technological needs; scalability, which facilitates adjustment to varying data processing demands; cost efficiency, which reduces financial overheads over time; and customization, which enables tailored solutions to meet specific requirements.

### SUMMARY

In light of the above, a compute device and a data processing system are provided.

It is an object of the present disclosure to enhance data processing capabilities, specifically without requiring any modifications on the host side.

The objects are solved by the features of the independent claims. Preferred embodiments are defined in the dependent claims.

According to an independent aspect of the present disclosure, a compute device is provided. The compute device includes a micro Secure Digital, microSD, card; and one or more Field Programmable Gate Arrays, FPGAs, mounted (or assembled) on the microSD card.

The term "microSD card" (alternatively known as microSD memory card or microSD form-factor memory card) denotes a type of removable flash memory storage device. The standard dimensions of a microSD card are approximately 15 mm in length, 11 mm in width, and 1 mm in height/thickness.

The term "Field Programmable Gate Array" (FPGA) denotes a type of digital integrated circuit (IC) that can be programmed or reprogrammed after manufacturing, making it "field-programmable". FPGAs consist of an array of programmable logic blocks, and a hierarchy of reconfigurable interconnects that allow the blocks to be wired together. Logic blocks can be configured to perform complex combinational functions, or merely simple logic gates like AND and XOR. In addition, FPGAs can contain memory elements, which may be simple flip-flops or more complete blocks of memory.

The term "mounted" refers to the mechanical installation of electronic devices, such as FPGAs, onto or within the microSD card's surface or structure through mechanical means. This mounting process can employ diverse methods and technologies, which are chosen based on, for example, the specific characteristics of the device being mounted and the microSD card's design.

According to some embodiments, which can be combined with other embodiments described herein, the compute device includes 2 or more, 4 or more, 6 or more, 8 or more, or 10 or more FPGAs mounted on the microSD card.

According to some embodiments, which can be combined with other embodiments described herein, the compute device includes 2 or 3 or 4 or 5 or 6 or 7 or 8 or 9 or 10 FPGAs mounted on the microSD card.

According to some embodiments, which can be combined with other embodiments described herein, the compute device, particularly the one or more FPGAs, is/are configured for re-programmability. For example, the compute device, particularly the one or more FPGAs, may be configured for re-programmability via a bootloader and/or a dedicated connector.

According to some embodiments, which can be combined with other embodiments described herein, the one or more FPGAs are configured to receive FPGA design bitstreams for configuring the one or more FPGAs. FPGA design bitstreams are essentially the binary files that contain the configuration data for programming an FPGA. The bitstream encodes information about how the FPGA's logic blocks, interconnects, and other resources are configured to implement the desired logic functions. It specifies what each programmable element in the FPGA should do and how these elements are interconnected.

According to some embodiments, which can be combined with other embodiments described herein, the one or more FPGAs are configured to receive custom FPGA design bitstreams for configuring the one or more FPGAs. Custom FPGA design bitstreams are the final, binary configuration files that have been created by the end-user for the purpose of configuring an FPGA to perform specific functions or tasks. Custom FPGA design bitstreams are not supplied by the compute device's manufacturer or any other entity involved in its distribution, such as retailers or licensors.

According to some embodiments, which can be combined with other embodiments described herein, the one or more FPGAs are initially in an unconfigured or pre-configured state and configured to receive custom FPGA design bitstreams for their configuration.

According to some embodiments, which can be combined with other embodiments described herein, the one or more FPGAs are configured to receive custom FPGA design bitstreams for configuring the one or more FPGAs via a bootloader. The bootloader may be a built-in bootloader, i.e., a feature of the compute device. A bootloader is generally understood as a specialized program or code that initiates the startup process of a computer system. The bootloader typically performs tasks such as hardware initialization, checking system integrity, and loading the operating system into memory. It ensures a smooth transition from the hardware's powered-off state to a state where the operating system can take control and manage the system's resources.

According to some embodiments, which can be combined with other embodiments described herein, the one or more FPGAs are configured for immediate operation. Specifically, the configuration of the one or more FPGAs can be done by the manufacturer of the compute device or another party involved in its distribution, such as retailers or licensors, instead of by the end-user.

According to some embodiments, which can be combined with other embodiments described herein, the compute device is configured to be removably inserted into an interface device of an external system, particularly to establish data communication with the external system.

The term "removably" as used throughout the present disclosure means a releasable mechanical connection between objects. It particularly refers to the capability or manner in which something can be taken away or detached, without causing damage or permanent alteration. When an object is described as being removably attached or connected, it indicates that it can be separated or taken off from its connected position without causing damage or introducing changes to either the object itself or its immediate environment.

According to some embodiments, which can be combined with other embodiments described herein, the interface device of the external system is a slot, and the microSD card of the compute device is configured to be removably inserted into the slot of the external system.

According to some embodiments, which can be combined with other embodiments described herein, the microSD card includes a first portion and a second portion, wherein the first portion is configured to fit within the interface device of the external system.

According to some embodiments, which can be combined with other embodiments described herein, the first portion is a front portion of the microSD card, and the second portion is a rear portion of the microSD card.

According to some embodiments, which can be combined with other embodiments described herein, the one or more FPGAs are provided at, or on, the second portion of the microSD card.

According to some embodiments, which can be combined with other embodiments described herein, the first portion of the microSD card includes a reinforcing section.

According to some embodiments, which can be combined with other embodiments described herein, the reinforcing section is provided by a reinforcing material applied to the first portion of the microSD card.

According to some embodiments, which can be combined with other embodiments described herein, the reinforcing material applied to the first portion of the microSD card includes, or is, an epoxy material.

According to some embodiments, which can be combined with other embodiments described herein, the reinforcing section is provided by at least one structural feature of the first portion of the microSD card.

According to some embodiments, which can be combined with other embodiments described herein, the at least one structural feature of the first portion of the microSD card includes at least one of a rib and a protrusion.

According to some embodiments, which can be combined with other embodiments described herein, the compute device further includes an encapsulation material on the first portion and/or the second portion of the microSD card.

According to some embodiments, which can be combined with other embodiments described herein, the encapsulation material includes, or is, the reinforcing material applied to the first portion of the microSD card, or the encapsulation material is provided in addition to the reinforcing material.

According to some embodiments, which can be combined with other embodiments described herein, the encapsulation material is provided on the first portion and the second portion of the microSD card. For example, the encapsulation material may cover essentially the entire microSD card.

According to some embodiments, which can be combined with other embodiments described herein, the first portion including the optional reinforcing section and encapsulation material has a height configured to fit within the interface device of the external system.

According to some embodiments, which can be combined with other embodiments described herein, the first portion including the optional reinforcing section and encapsulation material has a width configured to fit within the interface device of the external system.

According to some embodiments, which can be combined with other embodiments described herein, the first portion of the microSD card has a height of about 1mm. In some embodiments, the first portion of the microSD card has a height of 0.7mm ± 0.1mm.

According to some embodiments, which can be combined with other embodiments described herein, the first portion of the microSD card has a width of about 11mm. In some embodiments, the first portion of the microSD card has a width of 9.7mm ± 0.1mm.

According to some embodiments, which can be combined with other embodiments described herein, the compute device is configured to present itself to the external system as an empty and/or unformatted SD storage device.

According to some embodiments, which can be combined with other embodiments described herein, the external system includes, or is, a host computer. The term "host" as used throughout the present disclosure refers to a computer system or device that provides resources, services and/or data to other connected devices, notably the compute device. The host may interact and collaborate with the compute device to perform tasks.

According to some embodiments, which can be combined with other embodiments described herein, the external system includes, or is, a carrier module.

According to some embodiments, which can be combined with other embodiments described herein, the carrier module is configured for testing and/or characterizing the compute device.

According to some embodiments, which can be combined with other embodiments described herein, the carrier module is configured for connection to the host computer. Accordingly, the compute device can be connected to the host computer through the carrier module. This can also be referred to as a "peripheral configuration".

According to some embodiments, which can be combined with other embodiments described herein, the carrier module is configured for connection to the host computer through a cable connection and/or a wireless connection.

According to some embodiments, which can be combined with other embodiments described herein, the carrier module is a compact carrier module. A compact carrier module refers to a small-sized, densely arranged electronic carrier module designed to minimize physical space while maximizing the integration of electronic components.

According to some embodiments, which can be combined with other embodiments described herein, the carrier module includes, or is, a carrier board. The carrier board may be a circuit board, such as a compact circuit board.

According to some embodiments, which can be combined with other embodiments described herein, the carrier board has a board outline of *a* mm x *b* mm. *a* and *b* can be essentially identical or can be different. In one example, *a* can be in the range between 40 mm and 70 mm, and *b* can be in the range between 40 mm and 70 mm. In another example, *a* can be in the range between 50 mm and 60 mm, and *b* can be in the range between 50 mm and 60 mm. In some embodiments, *a* and/or *b* can be about 57 mm.

According to some embodiments, which can be combined with other embodiments described herein, the carrier module is connectable to a processor module to form a single-board computer. This can also be referred to as a "standalone configuration". A single-board computer (SBC) is a complete computer built on a single circuit board, with microprocessor(s), memory, input/output (I/O) and other features required for a functional computer.

According to some embodiments, which can be combined with other embodiments described herein, the carrier module includes at least one power port for supplying the carrier module, particularly the compute device, with power.

According to some embodiments, which can be combined with other embodiments described herein, the compute device further includes an interface module configured for data communication with the external system.

According to some embodiments, which can be combined with other embodiments described herein, the interface module is configured for data communication with the external system based on a SD (Secure Digital) protocol, a CXL (Compute Express Link) protocol, a PCIe (Peripheral Component Interconnect Express) protocol, a NVME (Non-Volatile Memory Express) protocol, and/or a USB (Universal Serial Bus) protocol.

According to some embodiments, which can be combined with other embodiments described herein, the compute device is configured to behave as a (functioning) microSD device so that the external system is able to communicate with the compute device using, for example, the SD protocol or the SD-over-SPI protocol.

According to some embodiments, which can be combined with other embodiments described herein, the compute device includes one or more Central Processing Units (CPUs). The one or more CPUs can be mounted on the microSD card.

According to some embodiments, which can be combined with other embodiments described herein, the compute device is a compute device for uncertainty tracking.

According to some embodiments, which can be combined with other embodiments described herein, the compute device is configured to process uncertainty information contained in input data. The input data may be received from the host computer or another external system via the interface module.

According to some embodiments, which can be combined with other embodiments described herein, the uncertainty information contained in the input data includes, or relates to, uncertainty distribution information and/or a probability distribution. A probability distribution is generally understood as a phenomenon in terms of its sample space and the probabilities of events.

According to some embodiments, which can be combined with other embodiments described herein, the input data are based on a set of empirical samples or an analytic distribution or a set of sensor readings.

The compute device can be configured to process the uncertainty information through the use of uncertainty tracking functionalities. According to some embodiments, which can be combined with other embodiments described herein, the uncertainty tracking functionalities include one or more operations. Preferably, the one or more operations are performed on distributional values. Preferably, the one or more operations include arithmetic operations, more preferably addition, subtraction, multiplication, division and/or exponentiation, or other such operations typically contained in the instruction set of a microprocessor.

The term "uncertainty tracking" (or uncertainty propagation) as used throughout the present disclosure generally refers to the process of quantifying and managing uncertainties or variations associated with the input data as well as quantifying the uncertainties of the results of each operation, e.g., ADD, SUB, etc., as the input data are processed by the compute device. The term "uncertainty tracking" (or uncertainty propagation) particularly refers to the process of monitoring how uncertainties in data affect the outputs of sequences of arithmetic operations that act on the data. For a given data item, such as a measurement, the term uncertainty quantification (UQ) is usually used to refer to the process of quantifying the uncertainty of that single data item. Uncertainty tracking aims to provide a more comprehensive understanding of the limitations and potential errors associated with computational outcomes. It involves techniques and methodologies for representing, propagating, and, in some cases, mitigating uncertainties to enhance the reliability and robustness of computational results. This becomes particularly crucial when dealing with real-world data, complex models, or situations where precise information is challenging to obtain. Non-limiting exemplary methods for processing uncertainty information are explained in WO2022248719.

According to some embodiments, which can be combined with other embodiments described herein, the compute device further includes at least one wireless communications module for transmitting data (e.g., results of the uncertainty tracking performed by the compute module) to one or more external entities. For example, the compute device could feature WiFi or BLE capabilities to send data to a nearby workstation or directly to a cloud compute engine via HTTP API.

According to some embodiments, which can be combined with other embodiments described herein, the one or more external entities include the host computer and/or the carrier module and/or a workstation and/or a cloud compute engine.

According to another independent aspect of the present disclosure, a data processing system is provided. The data processing system includes the compute device of the embodiments of the present disclosure and an external system including an interface device configured to receive the compute device.

According to some embodiments, which can be combined with other embodiments described herein, the external system may include the host computer and/or the carrier module described above.

According to some embodiments, which can be combined with other embodiments described herein, the carrier module is configured for testing and/or characterizing the compute device.

According to some embodiments, which can be combined with other embodiments described herein, the carrier module is connectable to a processor module to form a single-board computer.

According to some embodiments, which can be combined with other embodiments described herein, the data processing system is a data processing system for uncertainty tracking.

### BRIEF DESCRIPTION OF THE DRAWINGS

So that the manner in which the above recited features of the present disclosure can be understood in detail, a more particular description of the disclosure, briefly summarized above, may be had by reference to embodiments. The accompanying drawings relate to embodiments of the disclosure and are described in the following:
- FIG. 1: illustrates a schematic top view of a compute device according to embodiments of the present disclosure;
- FIG. 2A: illustrates a schematic top view of a compute device according to further embodiments of the present disclosure;
- FIG. 2B: illustrates a schematic side view of the compute device of FIG. 2A;
- FIG. 3: illustrates a schematic view of a data processing system according to embodiments of the present disclosure; and
- FIG. 4: illustrates a schematic view of a data processing system according to further embodiments of the present disclosure.

### DETAILED DESCRIPTION OF EMBODIMENTS

Reference will now be made in detail to the various embodiments of the disclosure, one or more examples of which are illustrated in the figures. Within the following description of the drawings, the same reference numbers refer to same components. Generally, only the differences with respect to individual embodiments are described. Each example is provided by way of explanation of the disclosure and is not meant as a limitation of the disclosure. Further, features illustrated or described as part of one embodiment can be used on or in conjunction with other embodiments to yield yet a further embodiment. It is intended that the description includes such modifications and variations.

This document includes references to "one embodiment" or "an embodiment". The appearances of the phrases "in one embodiment" or "in an embodiment" do not necessarily refer to the same embodiment. Particular features, structures, or characteristics may be combined in any suitable manner consistent with this disclosure.

The term "comprising" is open-ended. As used in the appended claims, this term does not foreclose additional structure or steps.

Various units, circuits, or other components may be described or claimed as "configured to" perform a task or tasks. In such contexts, "configured to" is used to connote structure by indicating that the units/circuits/components include structure (e.g., circuitry) that performs those task or tasks during operation. As such, the unit/circuit/component can be said to be configured to perform the task even when the specified unit/circuit/component is not currently operational (e.g., is not on). The units/circuits/components used with the "configured to" language include hardware, for example, circuits, memory storing program instructions executable to implement the operation, etc. Additionally, "configured to" can include generic structure (e.g., generic circuitry) that is manipulated by software and/or firmware (e.g., an FPGA or a general-purpose processor executing software) to operate in a manner that is capable of performing the task(s) at issue.

As used herein, the terms "first", "second", etc. are used as labels for nouns that they precede, and do not imply any type of ordering (e.g., spatial, temporal, logical, etc.).

As used herein, the term "based on" is used to describe one or more factors that affect a determination. This term does not foreclose additional factors that may affect a determination. That is, a determination may be solely based on those factors or based, at least in part, on those factors. Consider the phrase "determine A based on B." While in this case, B is a factor that affects the determination of A, such a phrase does not foreclose the determination of A from also being based on C. In other instances, A may be determined based solely on B.

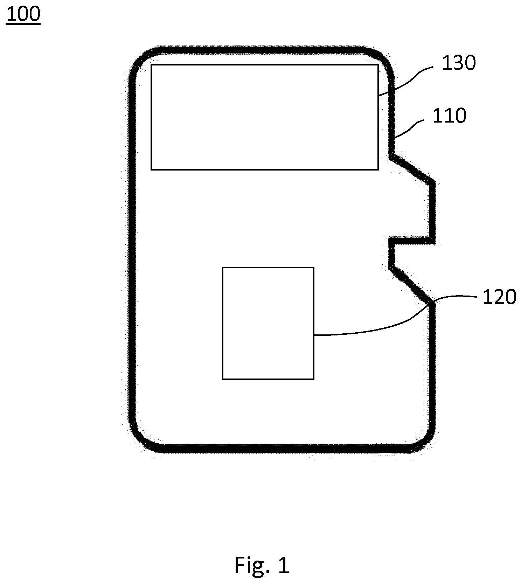

FIG. 1 illustrates a schematic view of a compute device 100 according to embodiments of the present disclosure. The compute device 100 can be a compute device for uncertainty tracking but is not limited thereto.

The compute device 100 includes a micro Secure Digital, microSD, card 110; and one or more Field Programmable Gate Arrays 120, FPGAs, mounted (or installed) on the microSD card 110. The compute device 100 may be understood as a microSD-card shaped PCB with one or more FPGAs mounted on top, functioning as an entire system.

The one or more FPGAs 120 can be configured to receive FPGA design bitstreams for configuring the one or more FPGAs 120.

The FPGA 120 can include 5280 logic cells, 128 Kbit (16 KB) dual-port Block RAM, 1 Mbit (128 KB) single-port RAM, one PLL, two SPI, and two I2C hard Ips, two internal oscillators (10 kHz and 48 MHz), 8 DSPs (16x16 multiply + 32-bit accumulate), and Hard IP PWM (for on-board LEDs).

In some embodiments, the one or more FPGAs 120 are initially in an unconfigured or pre-configured state and configured to receive FPGA design bitstreams for their configuration. This configuration process can be initiated through a bootloader, allowing for the dynamic customization of the FPGA's functionality. The FPGA design bitstreams can be custom FPGA design bitstreams. Custom FPGA design bitstreams are the final, binary configuration files that have been created by the end-user for the purpose of configuring an FPGA to perform specific functions or tasks. Custom FPGA design bitstreams are not supplied by the compute device's manufacturer or any other entity involved in its distribution, such as retailers or licensors.

In further embodiments, the one or more FPGAs 120 can be configured for immediate operation. Specifically, the configuration of the one or more FPGAs 120 can be done by the manufacturer of the compute device 100 or another party involved in its distribution, such as retailers or licensors, instead of by the end-user.

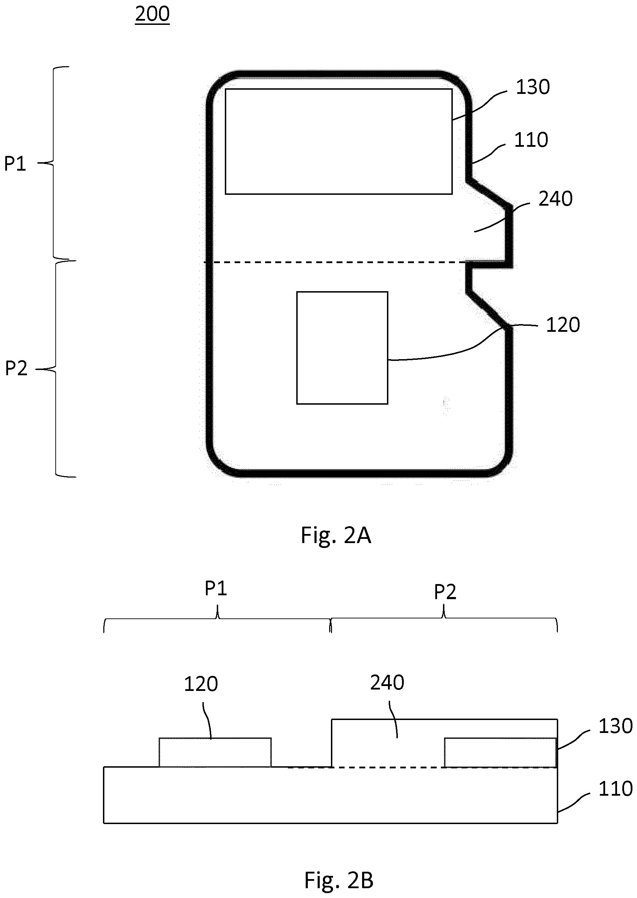

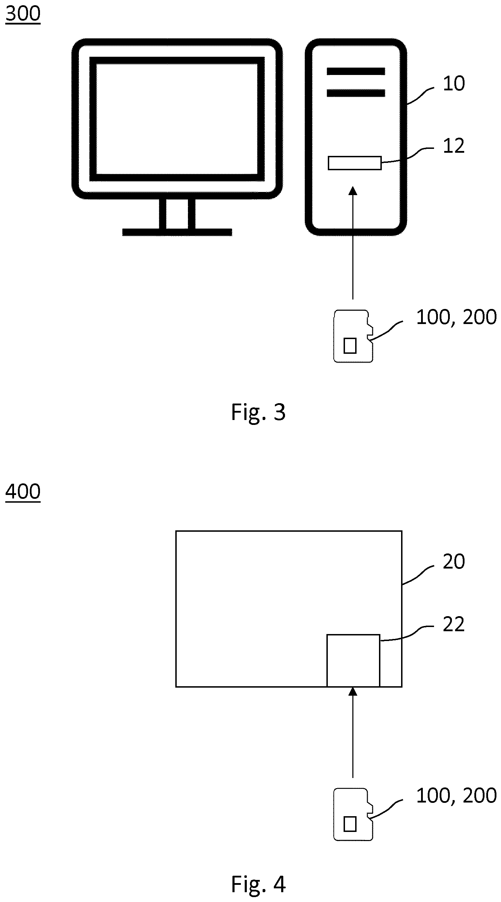

The compute device 100 can further include an interface module 130 configured for data communication with an external system, such as a host computer (FIG. 2) or a carrier module (FIG. 3). The interface module 130 can be configured for data communication with the external system based on a SD (Secure Digital) protocol, a CXL (Compute Express Link) protocol, a PCIe (Peripheral Component Interconnect Express) protocol, a NVME (Non-Volatile Memory Express) protocol, and/or a USB (Universal Serial Bus) protocol.

According to some embodiments, the compute device 100 may include one or more further electronic devices or components (not shown). The one or more further electronic devices or components may include, but are not limited to, at least one CPU, at least one memory module, programmable I/O pins, and/or at least one wireless communications module (e.g., Wi-Fi, BLE).

The at least one CPU can include, or be, a built-in RISC-V processor core. The RISC-V processor core can have an interface with applications running on the core using the SD protocol, support SD and SD-over-SPI modes of communication, and/or explore uncertainty tracking technology in edge-of-network systems.

The at least one memory module can include, or be, a SPI Flash. The SPI Flash can feature a 128 Mbit (16 MB) non-volatile memory, 50 MHz typical operating frequency, 133 MHz maximum operating frequency (fast read), and low power dissipation.

The programmable I/O pins can include, but are not limited to, on-board LEDs (one red and one green) for status indication, programmable I/O pins from the microSD interface, and additional programmable pins on test pads.

The compute device 100 can also feature a built-in bootloader to load new FPGA bitstreams or RISC-V applications via the SD interface. Accordingly, one could configure the compute device 100 and flash new firmware by writing to specific offset addresses of a storage device (e.g., using custom tools or even using the Unix dd utility).

The compute device 100 can be used to prototype designs on a breadboard using a microSD breakout board. Additionally, the compute device 100 could be integrated into a new PCB design by providing a dedicated microSD slot to host it. Moreover, the compute device 100 is capable of being connected to existing platforms that support microSD cards, such as the Bee Data Logger or the Adafruit Adalogger, where it can serve as a co-processor.

FIG. 2A illustrates a schematic top view of a compute device 200 according to further embodiments of the present disclosure. FIG. 2B illustrates a schematic side view of the compute device 200 of FIG. 2A.

The microSD card 110 of the compute device 200 includes a first portion P1 and a second portion P2. The first portion P1 can be a front portion of the microSD card 110, and the second portion P2 can be a rear portion of the microSD card 110 (e.g., defined with respect to an insertion direction).

The first portion P1 can be configured to fit within an interface device of an external system, such as a dedicated microSD slot, and may be configured to essentially fill the slot entirely.

The one or more FPGAs 120 are provided at, or on, the second portion P2 of the microSD card 110.

In some embodiments, the first portion P1 of the microSD card includes a reinforcing section 240. The reinforcing section 240 is configured to provide additional strength, stability, and durability. For example, the reinforcing material may provide additional strength and stability to a thin PCB layout.

In a non-limiting example, the reinforcing section 240 can be provided by a reinforcing material applied to the first portion P1 of the microSD card 110, such as an epoxy material.

In another non-limiting example, the reinforcing section 240 can be provided by at least one structural feature of the first portion P1 of the microSD card 110, such as at least one rib and/or at least one protrusion.

In some embodiments, the compute device 200 further includes an encapsulation material on the first portion P1 and/or the second portion P2 of the microSD card 110. For example, the encapsulation material may cover essentially the entire microSD card 110.

In some embodiments, the encapsulation material includes, or is, the reinforcing material applied to the first portion P1 of the microSD card 110, or the encapsulation material is provided in addition to the reinforcing material.

The first portion P1 including the optional reinforcing section 240 and encapsulation material has a height and width configured to fit within an interface device of the external system. For example, the first portion P1 of the microSD card 110 has a height of about 1mm and a width of about 11mm.

FIG. 3 illustrates a schematic view of a data processing system 300 according to embodiments of the present disclosure. The data processing system 300 can be a data processing system for uncertainty tracking but is not limited thereto.

The compute device 100, 200 is configured to be removably inserted into an interface device of an external system, particularly to establish data communication with the external system.

In the example of FIG. 3, the external system is a host computer 10. The interface device 12 of the host computer 10 can be a slot, and the microSD card of the compute device 100, 200 can be configured to be removably inserted into the slot of the host computer 10.

The interface device 12 can include at least one full-size SD slot for the compute device 100, 200 (via microSD to SD adapter) and/or for regular SD storage cards. The interface device 12 could also include at least one microSD slot for the compute device 100, 200 and/or regular microSD storage cards.

When plugged into the host computer 10, the compute device 100, 200 appears as an empty and unformatted SD storage device. From the host computer 10, custom FPGA design bitstreams can be loaded to the compute device 100, 200 via an SD interface. Alternatively, the compute device 100, 200 could have a built-in C0 RISC-V processor core, which can be used to run custom applications. In this mode of operation, the host computer 10 can use the SD protocol to exchange data with applications running on the compute device 100, 200, e.g. by creating custom applications that run on the host computer 10 and which access the compute device 100, 200, or by using Unix tools such as dd.

FIG. 4 illustrates a schematic view of a data processing system 400 according to further embodiments of the present disclosure. The data processing system 400 can be a data processing system for uncertainty tracking but is not limited thereto.

In the example of FIG. 4, the external system is a carrier module 20. The interface device 22 of the carrier module 20 can be a slot, and the microSD card of the compute device 100, 200 can be configured to be removably inserted into the slot of the carrier module 20.

The interface device 22 can include at least one full-size SD slot for the compute device 100, 200 (via microSD to SD adapter) and/or for regular SD storage cards. The interface device 22 could also include at least one microSD slot for the compute device 100, 200 and/or regular microSD storage cards. The interface device 22 could also feature SD card detection, programmable power cycling, and power measurement capabilities.

The carrier module 20 can include multiple I/Os. Examples include, but are not limited to, at least one USB-C downstream port, at least one USB-C upstream port, at least one USB-C upstream power-only port, at least one micro HDMI port, and JST connectors for SPI and I²C peripherals and GPIO connectors.

The carrier module 20 can be a compact carrier board and development system for testing and characterizing the compute device 100, 200.

The carrier board can have a board outline of *a* mm x *b* mm. *a* and *b* can be essentially identical or can be different. In one example, *a* can be in the range between 40 mm and 70 mm, and *b* can be in the range between 40 mm and 70 mm. In another example, *a* can be in the range between 50 mm and 60 mm, and *b* can be in the range between 50 mm and 60 mm. In some embodiments, *a* and/or *b* can be about 57 mm.

In some embodiments, the carrier module 20 can be used to connect the carrier module 20 to a host computer ("peripheral configuration": the carrier module 20 could act as a USB-to-SD adapter).

In further embodiments, the carrier module 20 can be combined with a processor module (e.g., Raspberry Pi CM4) to produce a compact single-board computer with hot-swappable FPGA modules or uncertainty tracking capabilities, achieved via the plugged-in compute device 100, 200 ("standalone configuration": the carrier module 20 could act as a Raspberry Pi CM4 motherboard). The standalone configuration also allows to measure the power dissipation of any compute device 100, 200 plugged into the carrier module 20, with microampere-level precision.

The methods described herein may be implemented in software, hardware, or a combination thereof, in different embodiments. Various modifications and changes may be made as would be obvious to a person skilled in the art having the benefit of this disclosure. The various embodiments described herein are meant to be illustrative and not limiting. Many variations, modifications, additions, and improvements are possible. Accordingly, plural instances may be provided for components described herein as a single instance. Boundaries between various components, operations and data stores are somewhat arbitrary, and particular operations are illustrated in the context of specific illustrative configurations. Other allocations of functionality are envisioned and may fall within the scope of claims that follow. Finally, structures and functionality presented as discrete components in the example configurations may be implemented as a combined structure or component. These and other variations, modifications, additions, and improvements may fall within the scope of embodiments as defined in the claims that follow.

## Claims

1. A compute device, comprising:
- a micro Secure Digital, microSD, card; and
- one or more Field Programmable Gate Arrays, FPGAs, mounted on the microSD card.

2. A compute device of claim 1, wherein:
- the one or more FPGAs are configured to receive custom FPGA design bitstreams for configuring the one or more FPGAs, particularly via a bootloader; and/or
- the one or more FPGAs are initially in an unconfigured or pre-configured state and configured to receive custom FPGA design bitstreams for their configuration; and/or
- the one or more FPGAs are configured for immediate operation.

3. A compute device of claim 1 or 2, wherein the compute device is configured to be removably inserted into an interface device of an external system, in particular wherein:
- the external system is a host computer or
- a carrier module configured for testing and/or characterizing the compute device.

4. A compute device of claim 3, wherein the interface device of the external system is a slot, and the microSD card of the compute device is configured to be removably inserted into the slot of the external system.

5. A compute device of claim 3 or 4, wherein the microSD card includes a first portion and a second portion, wherein the first portion is configured to fit within the interface device of the external system, in particular wherein the first portion is a front portion of the microSD card, and the second portion is a rear portion of the microSD card.

6. A compute device of claim 5, wherein the one or more FPGAs are provided at, or on, the second portion of the microSD card.

7. A compute device of claim 5 or 6, wherein the first portion of the microSD card includes a reinforcing section, in particular wherein the reinforcing section is provided by a reinforcing material applied to the first portion of the microSD card and/or by at least one structural feature of the first portion of the microSD card.

8. A compute device of any one of claims 5 to 7, further including an encapsulation material on the first portion and/or the second portion of the microSD card,

9. A compute device of claim 8, wherein:
- the encapsulation material covers the one or more FPGAs and/or
- the encapsulation material is an epoxy material and/or
- the encapsulation material includes, or is, the reinforcing material applied to the first portion of the microSD card, or the encapsulation material is provided in addition to the reinforcing material.

10. A compute device of any one of claims 3 to 9, wherein the compute device is configured to present itself to the external system as an empty and/or unformatted SD storage device.

11. A compute device of any one of claims 3 to 10, further including an interface module configured for data communication with the external system, in particular wherein the interface module is configured for data communication with the external system based on a SD protocol, a SD-over-SPI protocol, a CXL protocol, a PCIe protocol, a NVME protocol, or a USB protocol.

12. A compute device of any one of claims 1 to 11, wherein the compute module is configured to process uncertainty information contained in input data.

13. A data processing system, comprising:
- the compute device of any one of claims 1 to 12; and
- an external system including an interface device configured to receive the compute device.

14. A data processing system of claim 13, wherein the external system is
- a host computer, or
- a carrier module, in particular a carrier board.

15. A data processing system of claim 13 or 14, wherein the carrier module is connectable to a processor module to form a single-board computer.
